Europäisches Patentamt

European Patent Office

Office européen des brevets

(19)

(11) Veröffentlichungsnummer: **0 301 164**
**A2**

(12) **EUROPÄISCHE PATENTANMELDUNG**

(21) Anmeldenummer: **88103200.7**

(22) Anmeldetag: **11.11.81**

(51) Int. Cl.4: **B60L 13/02**

(30) Priorität: **11.11.80 DE 8030107 U**

(43) Veröffentlichungstag der Anmeldung:
**01.02.89 Patentblatt 89/05**

(60) Veröffentlichungsnummer der früheren
Anmeldung nach Art. 76 EPÜ: **0 052 346**

(84) Benannte Vertragsstaaten:
**AT BE CH DE FR GB IT LI**

(71) Anmelder: **MAGNET-BAHN GMBH**
**Emslander Strasse 3**
**D-8130 Starnberg(DE)**

(72) Erfinder: **Heidelberg, Goetz, Dipl.-Phys.**
**Am Huegel 16**
**D-8140 Starnberg-Percha(DE)**
Erfinder: **Gründl, Andreas, Dr.**
**Haseneystrasse 20**
**D-8000 München 70(DE)**
Erfinder: **Rosner, Peter, Dr.**
**Waltherstrasse 16**
**D-8000 München 2(DE)**

(74) Vertreter: **Vogl, Leo, Dipl.-Ing.**
**AEG Aktiengesellschaft Patente u. Lizenzen**
**Theodor-Stern-Kai 1 Postfach 70 02 20**
**D-6000 Frankfurt am Main 70(DE)**

(54) Elektrischer Antrieb oder Generator.

(57) Elektrischer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (2) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt,

wobei der Stator (2) in mehrere Abschnitte aufgeteilt ist, denen jeweils eine Schalteinrichtung zugeordnet ist, und wobei jedem Abschnitt ein adressierbarer Abschnittdatenspeicher zur Speicherung der jeweils aktuellen Daten über den Abschnitt zugeordnet ist, und daß die von den einzelnen Abschnitten zugeordneten Abschnittdatenspeicher von der Zentrale der Reihe nach zyklisch abfragbar sind.

FIG. 6

## Elektrischer Antrieb oder Generator sowie deren Verwendungen

Die Erfindung bezieht sich auf einen elektrischen Antrieb oder Generator gemäß Oberbegriff des Anspruchs 1.

Der Erfindung liegt die Aufgabe zugrunde, einen selbststeuernden Antrieb oder Generator dieser Art zu schaffen, der zu einem sicheren Betrieb auch bei gleichzeitigen Betrieb mehrerer Läufer führt.

Zur Lösung dieser Aufgabe ist der Antrieb oder Generator so ausgebildet, wie im kennzeichnenden Teil des Anspruchs 1 angegeben.

Bei der Erfindung sorgt die von dem Sensor gesteuerte elektronische Schalteinrichtung selbsttätig dafür, daß bei passenden Relativstellungen von Stator und Läufer den Leitern Strom zugeführt oder von den Leitern Strom abgeführt wird. Die Leiter sind in den meisten Fällen in Form von Spulen oder Wicklungen vorgesehen. In vielen Fällen ist es günstig und daher bevorzugt, mehrere Sensoren längs der Bewegungsbahn des Läufers am Stator entlang vorzusehen. Obwohl im Anspruch 1 von "Stromleitern" und "Dauermagneten" gesprochen ist, soll der untere Grenzfall von nur einem Stromleiter oder nur einem Dauermagnet mit umfaßt sein.

Die Ausdrucksweise "Antrieb oder Generator" soll nicht bedeuten, daß ein und dasselbe Aggregat in der Lage sein muß, diese beiden Funktionen wahlweise zu erfüllen. Es soll vielmehr zum Ausdruck gebracht werden, daß nach dem Prinzip der Erfindung sowohl ein Antrieb bzw. Motor als auch ein Generator erstellt werden kann. Nach dem Prinzip der Erfindung kann man allerdings auch ein Aggregat erstellen, das sowohl als Antrieb als auch als Generator arbeiten kann, was weiter unten noch deutlicher werden wird.

Die verwendeten Begriffe "Stator" und "Läufer" sollen nicht bedeuten, daß der Stator unbedingt der unbewegt bleibende Teil des Antriebs oder des Generators und der Läufer unbedingt der sich bewegende Teil des Antriebs oder des Generators ist. Vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daß sich sowohl Stator als auch Läufer mit unterschiedlicher Geschwindigkeit bewegen. Der Fall des unbewegt bleibenden Stators ist jedoch bevorzugt, da diesem Strom zugeführt bzw. von diesem Strom abgeführt werden muß.

Vorzugsweise verwendet man einen auf die funktionell sowieso vorgesehenen Dauermagnete oder auf gesondert zu diesem Zweck angeordnete Dauermagnete ansprechenden Sensor. Dies führt, besonders im erstgenannten Fall, zu einem einfach aufgebauten Antrieb oder Generator.

Wegen zahlreicher Vorteile ist es besonders bevorzugt, den Stator in mehrere Abschnitte aufzuteilen, denen jeweils eine Schalteinrichtung zugeordnet ist. Vorzugsweise, insbesondere bei Linearstatoren, ist pro Statorabschnitt mindestens ein Sensor vorgesehen. Vorzugsweise sind die Statorabschnitte kürzer als der Läufer, so daß sich die Antriebs- oder Generatorfunktion auf mehrere Statorabschnitte verteilt. Da pro Abschnitt geringere Ströme bzw. Leistungen verarbeitet werden müssen, ergibt sich eine Verteilung der elektrischen Verluste. Da pro Ab schnitt von der jeweiligen Schalteinrichtung geringere Ströme bzw. Leistungen bewältigt werden müssen, kommt man mit Schalteinrichtungen kleinerer Leistung aus, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Abschnitte die Gesamtfunktion nicht stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro Abschnitt klein bleibt und man sich in der vom Isolationsaufwand und damit vom Preisaufwand her günstigen VDE-Klasse bis 1ooo V halten kann. Es ist also alles in allem sehr viel günstiger, statt eines einzigen oder weniger Abschnitte jeweils mit einer Schalteinrichtung die Zahl der Abschnitte und Schalteinrichtungen zu erhöhen und dafür eine größere Zahl von Schalteinrichtungen, die jedoch einzeln eine niedrigere Schaltleistung haben, vorzusehen. Im unteren Grenzfall besteht ein Statorabschnitt aus einem einzigen Stromleiterpaar bzw. einer einzigen Spule.

Jeder Stromleitergruppe eines Abschnittes, wenn für die weiteren Überlegungen einmal vereinfachend angenommen ist, daß alle gleichzähligen Stromleiter eines ganzen Abschnittes elektrisch zusammengeschaltet sind, sind vorzugsweise wenigstens zwei Sensoren zugeordnet, vorteilhafterweise einer am Anfang und der andere am Ende des jeweiligen Abschnittes. Mit Hilfe des einen Sensors kann man die zugeordnete Stromleitergruppe einschalten, sobald der Läufer in den zugehörigen Abschnitt eintritt, und mit Hilfe des zweiten Sensors kann man die zugehörige Stromleitergruppe wieder abschalten, wenn der Läufer den zugehörigen Absatz verläßt.

Besonders bevorzugt ist aber eine Verteilung der Sensoren längs des Stators derart, daß bei jeder Läuferstellung für jede der Stromleitergruppen einer der ihr zugeordneten Sensoren von dem am Läufer angeordneten Steuermagneten bzw. anderen Steuereinrichtungen beeinflußbar ist. Durch dies Sensorverteilung wird erreicht, daß man die jeweils betrachtete Stromleitergruppe solange eingeschaltet hält, wie von einem der dieser Stromleitergruppe zugeordneten Sensoren das Vorhandensein des Läufers im Bereich dieser Stromleitergruppe, vorzugsweise im Bereich des mit dieser Stromleitergruppe übereinstimmenden Abschnittes, festgestellt wird. Man umgeht dabei Probleme, die besonders dann, wenn der Läufer in Vorwärts- und Rückwärtsrichtung bewegbar sein soll, dadurch auftreten können, daß ein Teil der Sensoren eine Einschaltung und der Rest der Sensoren eine Abschaltung der Erregung der zugehörigen Stromleitergruppen bewirken soll.

Insbesondere dann, wenn man einen erfindungsgemäßen Antrieb als Linearantrieb ausbildet, bei dem der Stator eine Schiene für einen oder mehrere als Fahrzeug bzw. Fahrzeuge verwendeten bzw. verwendete Läufer dient, erweist es sich als besonders vorteilhaft, eine zur Gesamtsteuerung dienende Zentrale vorzusehen. Diese kann mit den Schalteinrichtungen der einzelnen Abschnitte über einen Leitungsbus verbunden sein, über den Daten zwischen der Zentrale und den einzelnen Abschnitten ausgetauscht werden. Dabei weisen die einzelnen Abschnitte in besonders bevorzugter Weise je eine Eingabe/Ausgabeschaltung auf, über die der jeweilige Abschnitt Daten über den Leitungsbus zur Zentrale geben und von der Zentrale empfangen kann. Jede Eingabe/Ausgabeschaltung ist vorzugsweise mit einem Multischalter versehen, über den die Verbindung zwischen der Scahlteinrichtung des Abschnittes mit dem Leitungsbus herstellbar ist.

In besonders bevorzugter Weise werden den einzelnen Abschnitten über die Busleitung von der Zentrale Steuersignale z.B. hinsichtlich der zugelassenen Maximalgeschwindigkeit und der zugelassenen Vorschubkraft zugeführt. Zu diesem Zweck sind den einzelnen Abschnitten vorzugsweise Speicher, z.B. für diese Maximalwerte, zugeordnet, die von der Zentrale aus adressierbar sind und deren Speicherwerte die Schalteinrichtung der einzelnen Abschnitte beeinflussen.

Insbesondere für den Fall, daß man mehrere Läufer gleichzeitig betreibt, ist erfindungsgemäß jedem Abschnitt ein Speicher zugeordnet, dem eine bestimmte Adresse zugeordnet ist und der laufend auf den neuesten Informationsstand gebracht wird, und werden die einzelnen Abschnittspeicher von der Zentrale zyklisch reihum abgefragt.

Beim gleichzeitigen Betrieb mehrerer Läufer wendet man vorzugsweise ein Sicherungssystem an. Zu diesem Zweck meldet jeder Abschnitt, der in seinem Bereich einen Läufer feststellt, an seine benachbarten Abschnitte, daß er besetzt ist. Wenn ein Abschnitt von einem benachbarten Abschnitt dessen Besetztmeldung erhält und selbst nich besetzt ist, geht er in einen Sicherungszustand über, in dem er ein Spulenerregungsmuster aufweist, das auf einen unerwünscht in diesen Abschnitt einlaufenden Läufer bremsend wirkt. Gegebenenfalls können auch noch vor diesem gesicherten Abschnitt liegende weitere Abschnitte in den Sicherungszustand gebracht werden. Diese Sicherung kann ohne Zutun der Zentrale durch gegenseitige Beeinflussung benachbarter Abschnitte geschehen.

Eine bevorzugte Verwendung des nach den beschriebenen Prinzipien aufgebauten, erfindungsgemäßen Linearantriebs oder Lineargenerators leigt beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen. Bei all diesen Einsatzzwecken kommen der einfache konstruktive Aufbau und die vielfältigen Regelungsmöglichkeiten zum Tragen.

Vorstehend ist auch dann, wenn an sich die Antriebsfunktion im Vordergrund stand, vielfach von "Antrieb oder Generator" gesprochen worden. Dies ist geschehen, um zu betonen, daß auch bei Antrieben eine Umschaltbarkeit auf Generatorfunktion zum Bremsen vorgesehen sein kann.

Die Erfindung wird im folgenden anhand schematisiert dargestellter Ausführungsbeispiele noch näher erläutert. Es zeigen:

Fig. 1 einen Längsschnitt durch einen Linearantrieb längs I-I in Fig. 4;

Fig. 2 eine Ansicht von unten auf den Stator des Linearantriebs von Fig. 1 entsprechend II-II in Fig. 1;

Fig. 3 eine Ansicht von oben auf den Läufer des Linearantriebs von Fig. 1 entsprechend III-III in Fig. 1;

Fig. 4 einen Querschnitt des Linearantriebs von Fig. 1 längs IV-IV in Fig. 1; und

Fig. 5 bis 7 Ausführungsformen elektrischer Steuer-Schaltungen, die zur Steuerung der in den Fig. 1 bis 4 dargestellten Ausführungsform eines Linearantriebs verwendbar sind;

In den verschiedenen Ausführungsbeispielen werden Teile, die sich funktionell entsprechen, mit gleichen Bezugszeichen versehen.

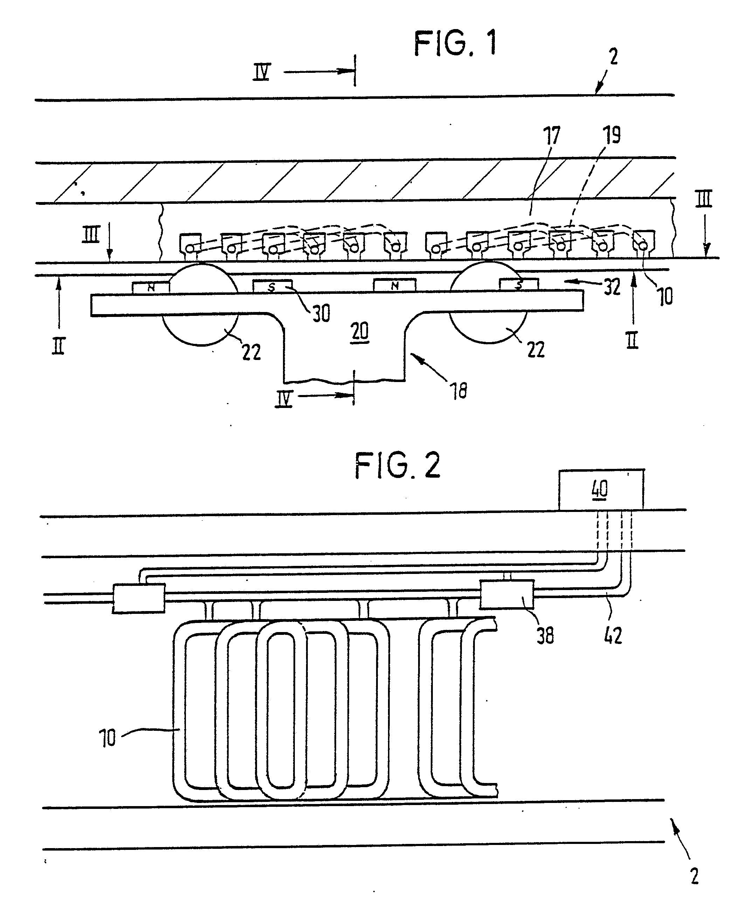

Bei dem in den Fig. 1 bis 4 dargestellten Linearantrieb handelt es sich um einen Antrieb, der für Transporteinheiten praktisch beliebiger Art geeignet ist. Konkret kann man sich ein magnetisch getragenes Fahrzeug zum Transport von Personen oder Lasten vorstellen.

Bei dieser Ausführungsform wird durchgehend aus Vereinfachungsgründen von "Antrieb" gesprochen, obwohl die Auslegung ohne weiteres so getroffen sein kann, daß bei einer Verlangsamung der Geschwindigkeit der Transporteinheit von Antriebsfunktion auf Generatorfunktion umgeschaltet werden kann.

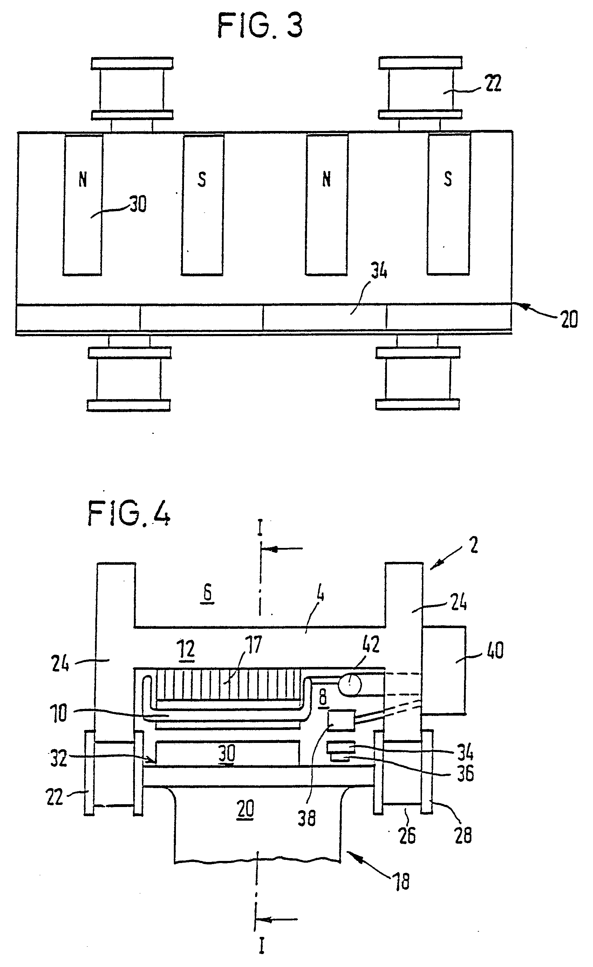

Der tragende Bestandteil des Stators 2 des Antriebs ist als liegender Doppel-T-Träger 4 ausgebildet. Somit entstehen, gesehen im Querschnitt des Trägers 4, eine obere, etwa rechteckige Ausnehmung 6 und eine untere, etwa rechteckige Ausnehmung 8, vgl. Fig. 4.

In der unteren Ausnehmung 8 ist ein Paket 17 aus sich in Längsrichtung erstreckenden, aufrecht stehenden, lamellierten Blechen aus ferromagnetischem Material befestigt. Das Paket 17 weist in seiner Unterseite Quernuten 19 auf, die einen gegenseitigen Mittenabstand haben, der einem Drittel des Mittenabstandes der weiter unten beschriebenen Dauermagnete 30 entspricht. In die Quernuten 19 sind Spulen 10 eingelegt, die in der Draufsicht etwa rechteckig sind. Jede Spule 10 besteht aus mehreren Windungen, wobei in den Zeichnungen aus Vereinfachungsgründen die Spulen jeweils nur aus einem dicken Draht bestehend dargestellt sind. Die quer zur Relativbewegungsrichtung von Stator und Läufer verlaufenden Queräste jeder Spule 10 befinden sich jeweils in einer Quernut 19, während die die Queräste verbindenden Längsäste seitlich des Pakets 17 liegen. Die Queräste jeder Spule 10 lassen zwischen sich zwei Quernuten 19 frei, die von den Querästen benachbarter Spulen besetzt werden. Die Längsäste führen seitlich des Pakets 17 zunächst vom ersten Querast schräg aufwärts und dann unter seitlicher Ausbuchtung nach außen steiler zurück nach unter zum anderen Querast, um auf diese Weise Platz für die Überkreuzung mit den Längsästen der beiden benachbarten Spulen zu schaffen.

Das Paket 17 bildet zusammen mit dem eingelegten Stromleitern 10 den funktionellen Teil des Stators 2.

Statt das Paket 17 mit Quernuten 19 auszubilden, können die zwischen den Quernuten 19 befindlichen Vorsprünge weggelassen werden und können die auf der flachen Unterseite des Pakets 17 angeordneten Spulen 10 mit einer Vergußmasse vergossen werden, die aus Kunststoff mit einem hohen Anteil von darin verteilten Eisenteilen oder Eisenoxidteilen sehr kleiner Korngröße von beispielsweise 70 μm besteht. Dabei müssen die Unterseiten der Stromleiter 10 zur Sicherstellung eines geordneten magnetischen Flusses frei von Vergußmasse bleiben.

Von der anzutreibenden Transporteinheit 18 ist nur der obere, mit dem Stator zusammenwirkende Bereich zeichnerisch dargestellt. Dieser obere Teil besteht aus einer Art Wagen 20 mit vier drehbar gelagerten Rädern 22, von denen zwei auf einem senkrechten Schenkel 24 und zwei auf dem anderen senkrechten Schenkel 24 des Trägers 4 abrollen, wobei die Räder 22 jeweils mit einer entsprechenden Spurrille 26 und Spurkränzen 28 versehen sind.

Auf der im wesentlichen ebenen Oberseite des Wagens 20 ist in Bewegungsrichtung hintereinander eine Reihe von Dauermagneten 30 angeordnet. Der unter den Magneten 30 befindliche Bereich des Wagens 20 besteht aus ferromagnetischem Material zur Schaffung eines magnetischen Rückschlusses auf der Rückseite der Dauermagneten 30. Die Dauermagnete 30 bilden zusammen mit diesem Rückschluß den Läufer 32 des Antriebs.

Die Dauermagnete 30 haben die Gestalt von sich quer zur Bewegungsrichtung des Wagens 20 erstreckenden, langgestreckten Quadern. Die Dauermagnete 30 sind, gemessen quer zur Bewegungsrichtung des Wagens 20, etwa so breit wie die Queräste der Stromleiter 10. Die untere Oberfläche der Vergußmasse bzw. des Blechpakets 17 hat einen Abstand von einigen Millimetern von den oberen Polflächen der Magnete 30.

In Bewegungsrichtung des Wagens 20 benachbarte Dauermagnete 30 haben einen Abstand voneinander, der jeweils dem in Bewegungsrichtung gemessenen Abstand der beiden Queräste einer Spule entspricht, jeweils gemessen von Mitte zu Mitte. Die Dauermagnete sind so auf dem Wagen 20 befestigt, daß bei den oberen Polflächen der Dauermagnete 30 Nordpole und Südpole miteinander abwechseln.

Die erste, vierte, siebte usw. Spule, die zweite, fünfte, achte usw. Spule sowie die dritte, sechste, neunte usw. Spule in Bewegungsrichtung des Wagens 20 sind jeweils hintereinandergeschaltet oder parallelgeschaltet. Somit entstehen magnetische Kreise, die jeweils im Stator 2 aus zwei mit räumlich entgegengerichteter Stromrichtung durchflossenen Querästen einer Spule bestehen, wobei der magnetische Fluß durch die wegen der Eisenpulverfüllung einen geringen magnetischen Widerstand aufweisende Vergußmasse bzw. das Blechpaket 17 geführt ist. Der dem Läufer 32 zugeordnete Teil jedes magnetischen Kreises besteht aus zwei Dauermagneten 30 mit dem entsprechenden beschriebenen Rückschluß.

Die Stromleiter 10 und die Dauermagnete 30 nehmen nicht die gesamte Breite zwischen den Stegen 24 bzw. zwischen den Rädern 22 ein. Im verbleibenden Raum des Wagens 20 ist eine weitere Reihe von als Dauermagneten ausgebildeten Steuermagneten 34 vorgesehen, die hinsichtlich Mittenabstand in Bewegungsrichtung des Wagens 20 mit den Dauermagneten 30 übereinstimmen, jedoch in Bewegungsrichtung länger sind, so daß sie aneinanderstoßen. In Normallage befinden sich die Kanten der Steuermagnete 34 in Bewegungsrichtung jeweils in der Mitte zwischen zwei Dauermagneten 30. Die Steuermagnete 34 sind auf einer längs verlaufenden Stange 36 angeordnet und mit Hilfe dieser Stange und eines nicht dargestellten Mechanismus in Bewegungsrichtung des Wagens 20 relativ zu den Dauermagneten 30 verschiebbar. Im verbleibenden Freiraum der unteren Ausnehmung 8 sind gegenüber den Steuermagneten 34 mehrere Hallsonden 38, deren Lageanordnung später genauer beschrieben wird, in Bewegungsrichtung des Wagens 20 verteilt mit geringem Abstand über den Steuermagneten 34 angeordnet. Die Hallsonden 38 liefern ihr Signal "Steuermagnet 34 befindet sich unter der Sonde" an eine Schalteinrichtung 40, die in einem außen an einem Steg 24 metallisch leitend angeschraubten Gehäuse untergebracht ist. Die Schalteinrichtung 40 ist in diesem Gehäuse mit Kunststoff eingegossen, und die Verlustwärme der Schalteinrichtung wird über das Gehäuse an den Steg 24 abgeführt.

Von der Schalteinrichtung führt ein dreiphasiges Kabel 42 entlang dem Träger 4 oberhalb der Hallsonden 38. Dieses Kabel 42 versorgt sämtliche Spulen 10 mit Strom. Wie weiter unten noch ausführlicher beschrieben werden wird, ermitteln die Hallsonden 38 die Relativstellung des Wagens 20 längs des Stators 2, und die Schalteinrichtung 40 sorgt dafür, daß gerade die für die Antriebsfunktion passenden Stromleiter 10 eingeschaltet werden, so daß jeweils eine Vortriebskraft ausübende magnetische Kreise synchron eingeschaltet werden. Der gesamte Stator ist längs in eine Vielzahl von Abschnitten unterteilt, wobei für jeden Abschnitt eine Schalteinrichtung 40 vorgesehen ist. Der Abstand der Hallsonden 38 in Bewegungsrichtung ist kleiner als der Abstand zwischen dem vordersten und dem hintersten Steuermagnet 34 des Wagens 30. Der beschriebene Antrieb ist vollkommen selbststeuernd, da sich der Wagen 20 sozusagen selbst immer zum richtigen Zeitpunkt die richtigen Stromleiter 10 einschaltet.

Durch Verschieben der Stange 36 und damit der Steuermagnete 34 in Bewegungsrichtung des Wagens 20 läßt sich von Wagen her Einfluß auf die Bewegung des Wagens nehmen. Wenn man zum Beispiel die Steuermagnete 34 auf die Mitte zwischen zwei benachbarte Dauermagnete 30 stellt, findet kein Antrieb statt. Wenn man zum Beispiel die Steuermagnete 34 um einen ganzen Mittenabstand der Dauermagnete 30 verschiebt, erfolgt der Antrieb in die umgekehrte Richtung. Geringere Verschiebungen der Steuermagnete 34 bewirken über eine künstliche Wirkungsgradverschlechterung des Antriebs eine Reduzierung der Vortriebskraft.

Die außen am Träger 4 angeschraubte Schalteinheit 40 ist über Steckverbindungen mit dem Kabel 42 und den Hallsonden 38 verbunden, so daß sie sich bei Defekten leicht auswechseln läßt.

Statt der beschriebenen Art der Spulenanordnung kann man auch mäanderförmig verlegte, beispielsweise in die Quernuten 19 des Stators 2 eingelegte Leiter vorsehen.

Beim dargestellten und beschriebenen Ausführungsbeispiel ist die Auslegung so, daß die magnetische Anziehung in Vertikalrichtung zwischen den Dauermagneten 30 und dem Stator 2 ausreicht, das Gewicht der Transporteinheit 18, gegebenenfalls mit Zuladung, zu tragen. Die Räder 22 sorgen dafür, daß der Luftspalt zwischen den Dauermagneten 30 und der Statorunterseite erhalten bleibt. Man kann aber die Auslegung auch so treffen, daß die Räder 22 oben auf dem Stator 2 abrollen, also das Gewicht der Transporteinheit 18 teilweise magnetisch und teilweise durch die Räder 22 getragen wird, oder daß sowohl auf der Statorunterseite als auch auf der Statoroberseite ablaufende Räder vorgesehen sind.

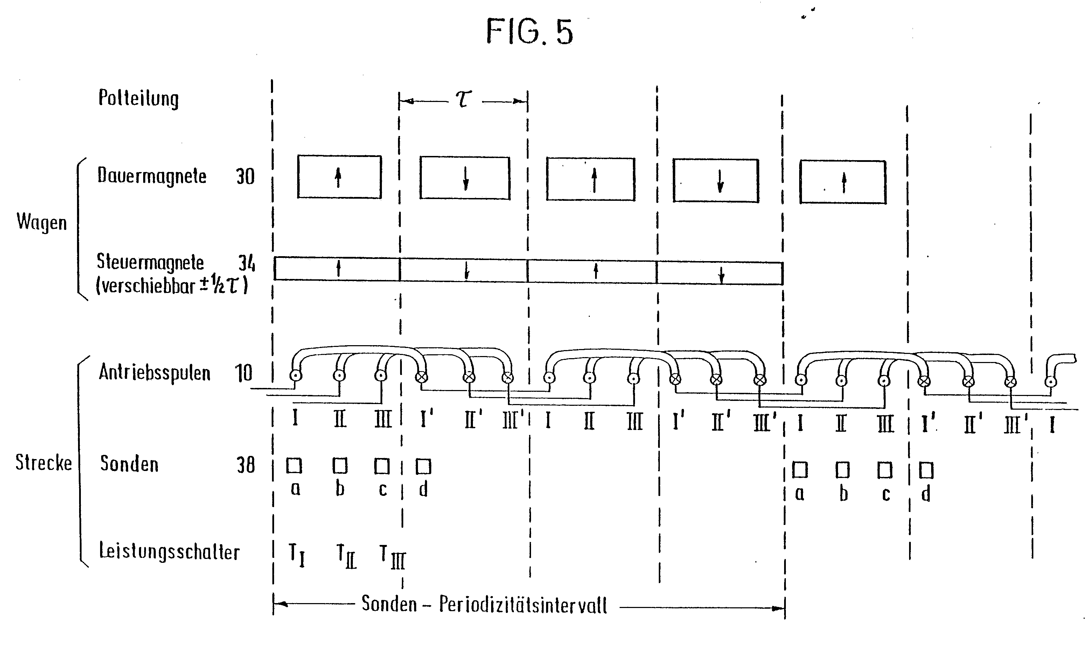

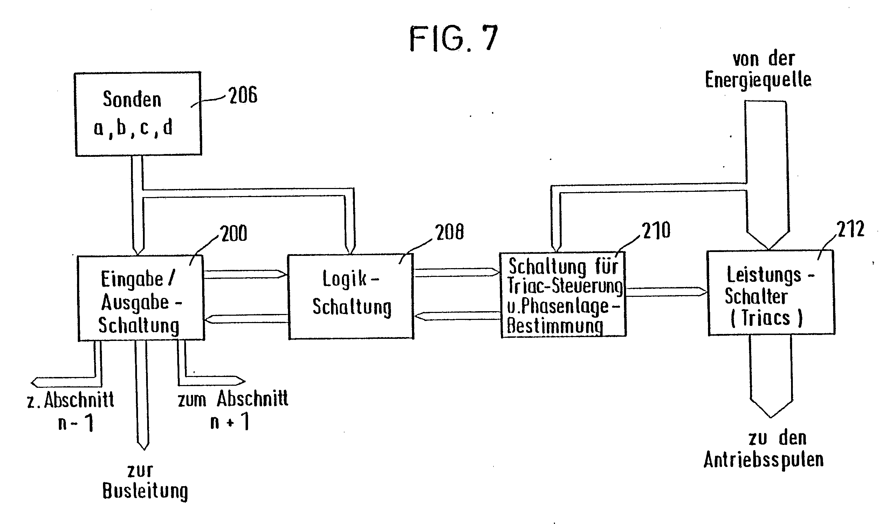

Anhand der Figuren 5 bis 7 wird nun eine bevorzugte Ausführungsform eines aus Linearantrieb und Steuerelektronik bestehenden Linearantriebssystems mit einigen Variationen erläutert.

Fig. 5 zeigt schematisch Stromleiter bzw. Spulen 10, deren Queräste, die einem Statorpol zugeordnet sind, mit I, II, und III bezeichnet sind, während deren andere Queräste, die in der Zeichnung im rechts danebenliegenden Statorpol angeordnet sind, mit I', II' und III' bezeichnet sind. Innerhalb eines Abschnittes des Stators sind die gleichzähligen Spulen alle hintereinandergeschaltet, wie es in Fig. 5 angedeutet ist. Die gleichzähligen Spulen eines Abschnittes können jedoch auch parallel zueinander geschaltet sein. In Fig. 5 sind ganz oben die am Läufer 32 angeordneten Dauermagnete 30 dargestellt, und zwar pro Statorpolteilung τ einer. Dabei wechseln sich Dauermagnete mit zum Stator weisendem Südpol und Dauermagnete mit zum Stator weisendem Nordpol ab (im folgenden kurz "Südpol-Magnet" bzw. "Nordpol-Magnet" genannt).

Zwischen den als Antriebsspulen wirkenden Statorspulen 10 und den Dauermagneten 30 sind, ebenfalls schematisch, die Steuermagnete 34 dargestellt, die in der Statorpoleinteilung ebenfalls abwechselnd Nordpol- und Südpol-Dauermagnete sind. Diese Steuermagnete 34 sind auf der bereits erwähnten Stange 36 angeordnet und sind mit dieser in Bewegungsrichtung des Läufers bzw. des Wagens 20 relativ zu den Dauermagneten 30 verschiebbar. Bei der in Fig. 5 schematisch dargestellten Ausführungsform weist der Wagen fünf Dauermagnete 30 und vier Steuermagnete 34 auf.

In Fig. 5 sind unterhalb der Statorspulen 10 als Rechtecke schematisch Hallsonden 38 dargestellt. Dabei sind die Hallsonden a den in Fig. 5 linken Querästen der Spulen I, die Hallsonden b den linken Querästen der Spulen II und die Hallsonden c den linken Querästen der Spulen III zugeordnet. In der bevorzugten Ausführungsform sind die Hallsonden a, b und c zu Hallsonden gruppen zusammengefaßt, die je im Bereich eines Statorpols angeordnet sind und zwischen sich Lücken aufweisen, die von der Länge der Steuermagnetreihe abhängen. Bei der in Fig. 5 dargestellten Ausführungsform, bei der fünf Dauermagnete 30 und vier verschiebbare Steuermagnete 34 vorgesehen sind, folgt auf jede Hallsondengruppe a, b, c eine Lücke entsprechend dreier Statorpolbreiten.

Man könnte nun Hallsonden zum Einsatz bringen, die sowohl auf Nordpol- als auch auf Südpol-Dauermagnete ansprechen. Da unterschieden werden müßte, ob sich über einer bestimmten Spule 10 ein Nordpol- oder ein Südpol-Dauermagnet befindet, müßten am Ausgang der Hallsonden drei verschiedene Informationen verarbeitet werden, nämlich

1. ein Südpol beeinflußt die Hallsonde,

2. ein Nordpol beeinflußt die Hallsonde und

3. die Hallsonde ist außer Einfluß durch einen Magneten. Ein solches System mit drei unterschiedlichen Informationen würde man zweckmäßigerweise nicht mit binären Digitalschaltungen weiterverarbeiten, sondern mit Digitalschaltungen, die auf die Verarbeitungen dreier unterschiedlicher Signalzustände eingerichtet sind.

Bei der in Fig. 5 dargestellten bevorzugten Ausführungsform verwendet man Hallsonden 38, die nur auf Nordpol- oder nur auf Südpol-Dauermagneten ansprechen. Für die weitere Beschreibung wird vereinfachend vorausgesetzt, daß die Hallsonden 38 nur auf Südpol-Dauermagneten ansprechen.

Wie bereits erwähnt, wird bei der bevorzugten Ausführungsform die Spulenstrecke eines jeden Statorabschnittes nicht mittels Hallsonden am Abschnittanfang eingeschaltet und mittels Hallsonden am Abschnittende ausgeschaltet, sondern die Spulenstrecke eines Abschnittes bleibt dadurch eingeschaltet, daß während der gesamten Aufenthaltszeit des sich bewegenden Wagens im Abschnitt von den Steuermagneten immer Hallsonden beeinflußt sind. Bei der bevorzugten Ausführungsform nach Fig. 5 hat man nun eine Einsparung von Hallsonden dadurch erreicht, daß man in den Lücken zwischen aufeinanderfolgenden Hallsondengruppen a, b, c Einzelhallsonden d angeordnet hat. Und zwar an solchen Stellen, daß diese Einzelhallsonden d dann von einem Südpol-Steuermagnet 34 beeinflußt werden, wen sich unter dem Steuermagneten 34 befindliche Hallsondengruppen a, b, c nur unter einem Nordpol-Steuermagneten 34 befinden, auf den sie nicht ansprechen. Während bei einer Beeinflussung von Hallsonden a, b, c durch einen Südpol-Steuermagneten die Queräste I, II bzw. III der Spulen beispielsweise in einer in Fig. 5 in die Zeichenebene hineinzeigenden Richtung von Strom durchflossen werden, muß lediglich dafür gesorgt werden, daß dann, wenn nur die Einzelhallsonde d von einem Südpol-Steuermagneten beeinflußt wird, nicht aber die Hallsonden a, b, c, die Stromrichtung durch die Antriebsspulen umgekehrt wird.

Allgemein kann man also sagen, daß die Hallsondengruppen a, b, c und die Einzelhallsonde d derart entlang des Stators verteilt sind, daß immer mindestens eine Hallsonde der Hallsondengruppe a, b, c oder mindestens eine Einzelhallsonde d von einem Südpol-Steuermagneten beeinflußt ist.

Die Ansteuerung der einzelnen Spulen 10 wird weiter unten noch ausführlicher anhand der Wahrheitstabelle in Fig. 15 erläutert.

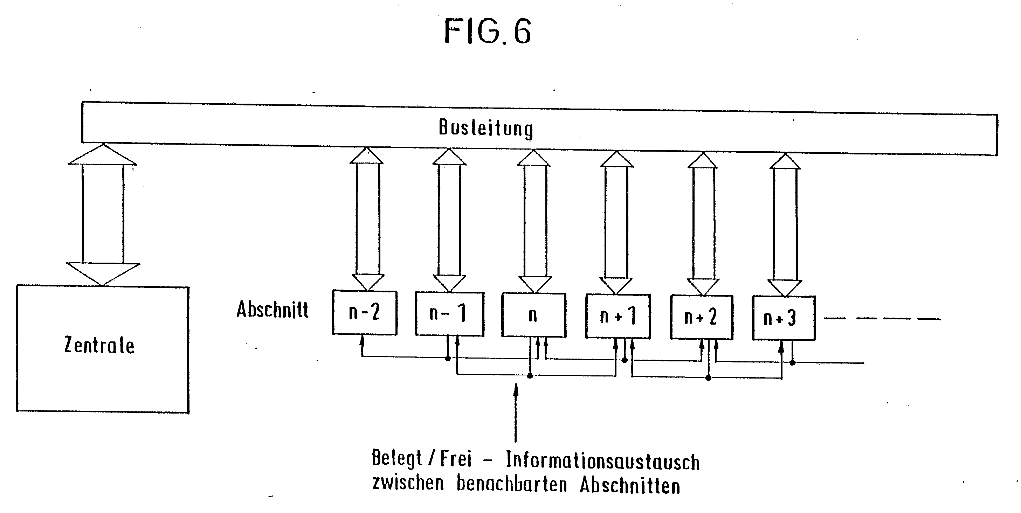

Fig. 6 zeigt eine Einteilung des linearen Stators 2 in eine Vielzahl von einzelnen Abschnitten n-2, n-1, n, n + 1, ..., die je mittels einer Eingabe/Ausgabeschaltung 200 mit einer Busleitung 202 verbunden sind. Diese stellt eine Verbindung zwischen den einzelnen Abschnitten und einer Zentrale 204 her, mittels welcher das gesamte Linearantriebssystem gesteuert werden kann.

Die einzelnen Abschnitte sind mit den benachbarten Abschnitten verbunden, wie in Fig. 6 unterhalb der Abschnitte dargestellt ist. Diese Verbindungen dienen dazu, beim Wechsel des sich bewegenden Wagens 20 von einem zum nächsten Abschnitt sicherzustellen, daß immer nur ein Abschnitt seine Daten über die Busleitung 202 an die Zentrale gibt. Beispielsweise wird jeweils dem Abschnitt mit höherer Numerierung, im folgenden höherer Abschnitt genannt, vor dem Abschnitt niedrigerer Numerierung, im folgenden niedrigerer Abschnitt genannt, Priorität zuerkannt. Dies geschieht dadurch, daß dann, wenn sich der bewegte Wagen 20 beim Wechsel vom einen zum anderen Abschnitt vorübergehend auf Teilen beider Abschnitte befindet, der höhere Abschnitt den niedrigeren Abschnitt an einer Informationsabgabe an die Busleitung 202 hindert.

Wird die Netzwechselspannung einem Drehstromnetz entnommen, kann man zu dessen gleichmäßiger Auslastung die einzelnen Abschnitte der Reihe nach zugleich mit den unterschiedlichen Phasen des Drehstromnetzes verbinden. In Fig. 6 könnte man beispielsweise die Abschnitte n-2 und n + 1 mit der R-Phase, die Abschnitte n-1 und n + 2 mit der S-Phase und die Abschnitte n und n + 3 mit der T-Phase verbinden.

Dieses Linearantriebssystem eignet sich auch für das gleichzeitige Antreiben mehrerer voneinander beabstandeter Wagen 20. Hierfür kann man beispielsweise jedem Abschnitt einen Speicher zuordnen, dessen Speicherinhalt den Zustand des jeweiligen Abschnittes anzeigt. Die Zentrale 204 kann dann über die Busleitung 202 in vorbestimmten kurzen Zeitabständen reihum die Inhalte der den einzelnen Abschnitten zugeordneten Speicher abfragen. Zu diesem Zweck können die einzelnen Speicher adressierbar und mittels Adressenwörtern anwählbar sein.

**Ansprüche**

1. Elektrischer Antrieb oder Generator, mit einem mit Stromleitern versehenen Stator und einem mit Dauermagneten versehenen Läufer, die mit einem Spaltabstand zwischen sich angeordnet sind, mit mindestens einem, am Stator (2) vorgesehenen Sensor (38), der die Relativstellung von Stator (2) und Läufer (32) erfaßt, und mit einer von dem Sensor (38) gesteuerten elektronischen Schalteinrichtung, die bei antriebsgerechter bzw. generatorgerechter Relativstellung von Stator (2) und Läufer (32) eine elektrische Verbindung zwischen den Stromleitern (10) und einer Stromquelle bzw. Stromsenke herstellt,
wobei der Stator (2) in mehrere Abschnitte aufgeteilt ist, denen jeweils eine Schalteinrichtung zugeordnet ist, dadurch gekennzeichnet, daß jedem Abschnitt ein adressierbarer Abschnittdatenspeicher zur Speicherung der jeweils aktuellen Daten über den Abschnitt zugeordnet ist, und daß die von den einzelnen Abschnitten zugeordneten Abschnittdatenspeicher von der Zentrale der Reihe nach zyklisch abfragbar sind.

2. Antrieb oder Generator nach Anspruch 1, dadurch gekennzeichnet, daß ein Teil der Abschnitte abschaltbar ist.

3. Verwendung des linear ausgebildeten Antriebs oder Generators nach Anspruch 1 oder 2 beim Antrieb von Transporteinheiten, insbesondere Straßenfahrzeugen, Schienenfahrzeugen, Magnetschwebefahrzeugen, Jahrmarktsfahrzeugen, Magazin-Transporteinheiten, rollenden Gehsteigen, Paletten, Skiliften, Materialförderbahnen.

EP 0 301 164 A2

FIG. 1

FIG. 2

## FIG. 3

## FIG.4

# FIG. 5

Polteilung

Wagen — Dauermagnete 30

Steuermagnete 34 (verschiebbar ±½τ)

Strecke — Antriebsspulen 10

I II III | I' II' III' | I II III | I' II' III' | I II III | I' II' III' | I

Sonden 38
a b c | d ... a b c | d

Leistungsschalter $T_I$ $T_{II}$ $T_{III}$

Sonden – Periodizitätsintervall

EP 0 301 164 A2

# FIG.6

Busleitung

Zentrale

Abschnitt n-2 | n-1 | n | n+1 | n+2 | n+3

Belegt / Frei - Informationsaustausch
zwischen benachbarten Abschnitten

EP 0 301 164 A2

# FIG. 7

Sonden a,b,c,d — 206

von der Energiequelle

200 — Eingabe / Ausgabe - Schaltung

208 — Logik - Schaltung

210 — Schaltung für Triac-Steuerung u.Phasenlage - Bestimmung

212 — Leistungs - Schalter ( Triacs )

z.Abschnitt n - 1

zum Abschnitt n + 1

zur Busleitung

zu den Antriebsspulen

EP 0 301 164 A2